(19) **Europäisches Patentamt / European Patent Office / Office européen des brevets**

(11) **EP 4 745 939 A1**

(12) **EUROPEAN PATENT APPLICATION**
published in accordance with Art. 153(4) EPC

(43) Date of publication:
**20.05.2026 Bulletin 2026/21**

(21) Application number: **24842918.5**

(22) Date of filing: **28.06.2024**

(51) International Patent Classification (IPC):
*G08G 1/16* (2006.01)    *B60W 30/02* (2012.01)
*B60W 40/10* (2012.01)    *B60W 40/12* (2012.01)
*B60W 50/14* (2020.01)    *B62D 53/00* (2006.01)

(52) Cooperative Patent Classification (CPC):
**B62D 13/00; B60D 1/62; B60W 30/02;**
**B60W 50/14; B62D 15/025; B62D 53/00;**
**G08G 1/16;** B60W 2520/10; B60W 2530/203;
B60W 2540/18

(86) International application number:
**PCT/JP2024/023525**

(87) International publication number:
**WO 2025/018123 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.07.2023 JP 2023116024**

(71) Applicant: **JTEKT CORPORATION**
**Kariya-shi, Aichi 448-8652 (JP)**

(72) Inventor: **NITTA Nobuhiro**
**Tokyo 103-0022 (JP)**

(74) Representative: **Winter, Brandl - Partnerschaft
mbB
Alois-Steinecker-Straße 22
85354 Freising (DE)**

(54) **ARTICULATED VEHICLE CONTROL DEVICE, ARTICULATED VEHICLE CONTROL METHOD, AND ARTICULATED VEHICLE CONTROL PROGRAM**

(57)    A control device (80, 90) is configured to execute an acquisition process and a notification process. The acquisition process is a process of acquiring a value of a steered angular velocity variable. The steered angular velocity variable is a variable indicating the rate of change in the steered angle of the tractor. The notification process is a process of, when the absolute value of the value of the steered angular velocity variable is greater than or equal to a threshold, notifying of a possibility of occurrence of a sway phenomenon of the trailer (10) by operating a notification device. The notification device (116) is an interface configured to convey information to a person.

EP 4 745 939 A1

# Fig.4

START

S40
TRAILER TOWING MODE?
NO
YES

S42
SET THRESHOLD ωhth

S44
F=1 ?
NO
YES

S60
PREDETERMINED PERIOD OF TIME ELAPSED?
NO
YES

S62
F←0

S46
ACQUIRE STEERING ANGLE θh, STEERING SPEED ωh, AND VEHICLE SPEED V

S48
$|\omega h| \geqq \omega hth$?
NO
YES

S50
$|\theta h| \geqq \theta hth$?
NO
YES

S52
$\theta h \cdot \omega hth > 0$?
NO
YES

S54
$V \geqq V th$?
NO
YES

S56
F←1

S58
APPLY VIBRATION TO STEERING WHEEL

END

**Description**

TECHNICAL FIELD

The present disclosure relates to control devices for articulated vehicles, control methods for articulated vehicles, and control programs for articulated vehicles.

BACKGROUND ART

For example, Patent Document 1 below describes a control device for addressing a so-called sway phenomenon in which a trailer of an articulated vehicle sways. When the sway phenomenon occurs, this control device reduces the sway of the trailer through brake control.

Related Art Documents

Patent Documents

Patent Document 1: US Unexamined Patent Application Publication No. 2019/0001944

SUMMARY OF THE INVENTION

Problem to be Solved by the Invention

In an articulated vehicle, it is more desirable to suppress occurrence of the sway phenomenon itself as much as possible than to reduce the sway of the trailer after the sway phenomenon has occurred.

Means for Solving the Problem

One aspect of the present disclosure provides a control device for an articulated vehicle. The articulated vehicle includes a tractor and a trailer configured to be towed by the tractor. The control device is configured to execute an acquisition process and a notification process. The acquisition process is a process of acquiring a value of a steered angular velocity variable. The steered angular velocity variable is a variable indicating the rate of change in the steered angle of the tractor. The notification process is a process of, when the absolute value of the value of the steered angular velocity variable is greater than or equal to a threshold, notifying of a possibility of occurrence of a sway phenomenon of the trailer by operating a notification device. The notification device is an interface configured to convey information to a person.

Another aspect of the present disclosure provides a control method for an articulated vehicle. The articulated vehicle includes a tractor and a trailer configured to be towed by the tractor. The control method includes: executing an acquisition process; and executing a notification process. The acquisition process is a process of acquiring a value of a steered angular velocity variable. The steered angular velocity variable is a variable indicating the rate of change in the steered angle of the tractor. The notification process is a process of, when the absolute value of the value of the steered angular velocity variable is greater than or equal to a threshold, notifying of a possibility of occurrence of a sway phenomenon of the trailer by operating a notification device. The notification device is an interface configured to convey information to a person.

Still another aspect of the present disclosure provides a control program for an articulated vehicle. The articulated vehicle includes a tractor and a trailer configured to be towed by the tractor. The control program includes a command to cause a computer to execute an acquisition process and a notification process. The acquisition process is a process of acquiring a value of a steered angular velocity variable. The steered angular velocity variable is a variable indicating the rate of change in the steered angle of the tractor. The notification process is a process of, when the absolute value of the value of the steered angular velocity variable is greater than or equal to a threshold, notifying of a possibility of occurrence of a sway phenomenon of the trailer by operating a notification device. The notification device is an interface configured to convey information to a person.

BRIEF DESCRIPTION OF THE DRAWINGS

[FIG. 1] FIG. 1 is a perspective view showing the configuration of an articulated vehicle according to a first embodiment.
[FIG. 2] FIG. 2 is a diagram showing the configuration of a control system according to the embodiment.
[FIG. 3] FIG. 3 is a flowchart showing a sequence of processing steps executed by the control system according to the embodiment.
[FIG. 4] FIG. 4 is a flowchart showing a sequence of processing steps executed by a steering ECU according to the embodiment.
[FIG. 5] FIG. 5 is a flowchart showing a sequence of processing steps executed by a steering ECU according to a second embodiment.
[FIG. 6] FIG. 6 is a flowchart showing a sequence of processing steps executed by a steering ECU according to a third embodiment.
[FIG. 7] FIG. 7 is a flowchart showing a sequence of processing steps executed by a steering ECU according to a fourth embodiment.
[FIG. 8] FIG. 8 is a flowchart showing a sequence of processing steps executed by a steering ECU according to a fifth embodiment.

MODES FOR CARRYING OUT THE INVENTION

<First Embodiment>

A first embodiment will be described below with reference to the drawings.

"Configuration of Articulated Vehicle"

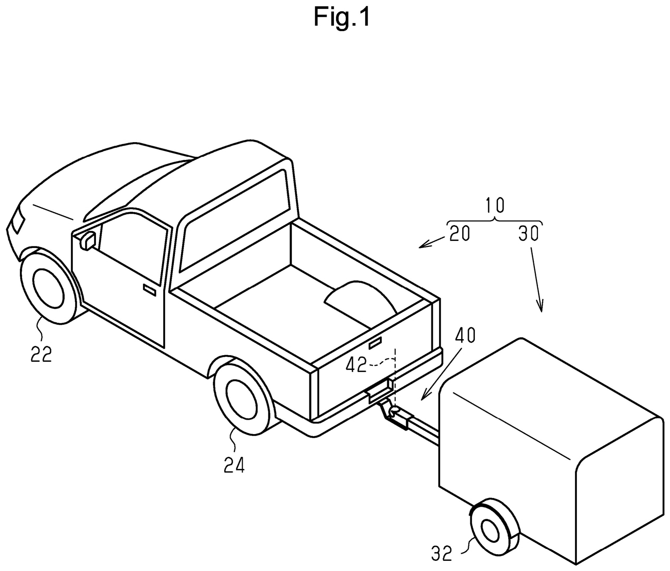

As shown in FIG. 1, an articulated vehicle 10 includes a tractor 20 and a trailer 30. The tractor 20 includes front wheels 22 and rear wheels 24. The front wheels 22 include two wheels, namely a right front wheel and a left front wheel, and the rear wheels 24 include two wheels, namely a right rear wheel and a left rear wheel. In FIG. 1 an enclosed box trailer is illustrated as the trailer 30. The trailer 30 includes wheels 32. The wheels 32 include two wheels, namely a right wheel and a left wheel.

The trailer 30 is connected to the rear of the tractor 20 via a ball joint 40. The ball joint 40 is a member that connects the trailer 30 to the tractor 20 such that the trailer 30 is rotatable about an axis 42. The axis 42 extends along the height direction of the tractor 20.

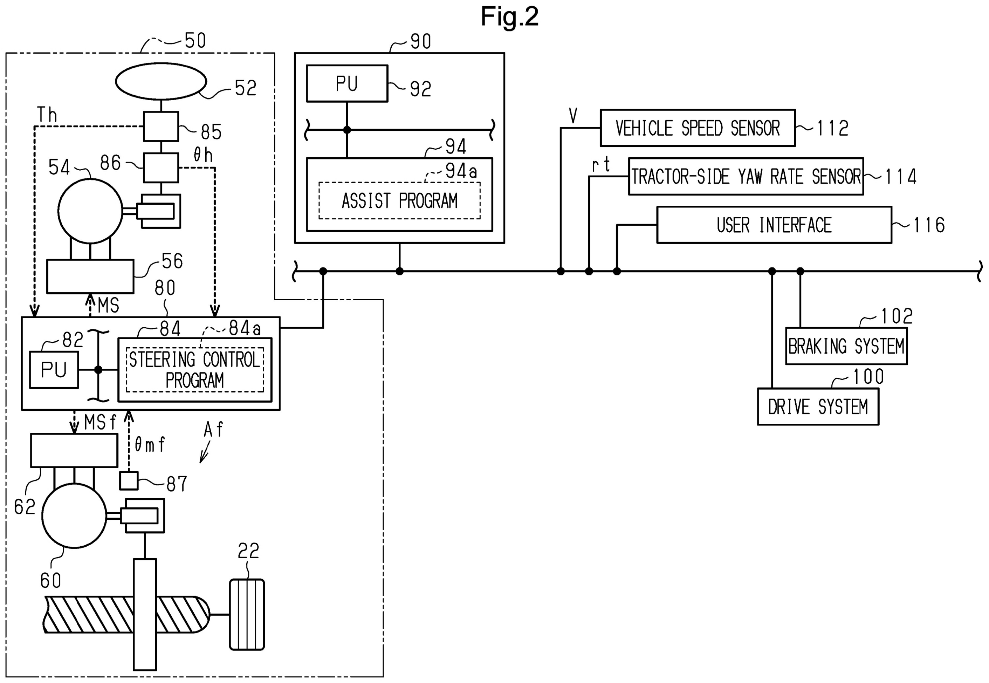

FIG. 2 illustrates part of members included in the tractor 20. As shown in FIG. 2, a reaction force from a reaction force motor 54 is applied to a steering wheel 52 in a steering system 50 included in the articulated vehicle 10. The reaction force is torque having a sign opposite to that of the torque applied to the steering wheel 52 by the driver. An output voltage of an inverter 56 is applied to terminals of the reaction force motor 54.

The steering system 50 includes a front-wheel actuator Af. In the front-wheel actuator Af, power from a front-wheel steering motor 60 is applied to the front wheels 22 included in the steering system 50. An output voltage of an inverter 62 is applied to terminals of the front-wheel steering motor 60.

A steering ECU 80 controls torque of the reaction force motor 54 in order to control a controlled variable of the steering wheel 52 that is a controlled object. The controlled variable is the reaction force. The steering ECU 80 also controls torque of the front-wheel steering motor 60 in order to control a controlled variable of the front wheels 22 that is a controlled object. The controlled variable is the steered angle of the front wheels 22. The steered angle is a turning angle of the tires of the front wheels 22.

For control of the controlled variables, the steering ECU 80 refers to steering torque Th detected by a torque sensor 85. The steering torque Th is torque input to the steering wheel 52. For control of the controlled variables, the steering ECU 80 also refers to a steering angle $\theta h$ detected by a steering angle sensor 86. For control of the controlled variables, the steering ECU 80 also refers to a rotation angle $\theta mf$ of the front-wheel steering motor 60 detected by a rotation angle sensor 87.

The steering ECU 80 includes a PU 82 and a storage device 84. The PU 82 is a software processing device including at least one of a CPU, a GPU, a TPU, and the like. A steering control program 84a is stored in the storage device 84.

The tractor 20 includes a drive system 100. The drive system 100 includes at least one of the following two devices as a thrust generation device of the vehicle: an internal combustion engine, and a rotating electrical machine. The tractor 20 includes a braking system 102. The braking system 102 includes at least one of the following two devices: a device that reduces the speed of rotation of the wheels by frictional force, and a device that reduces the speed of rotation of the wheels by converting the power of the wheels into electrical energy. The device that reduces the speed of rotation of the wheels by the conversion into electrical energy may be shared with the rotating electrical machine of the drive system.

The tractor 20 includes an ADAS ECU 90. The ADAS ECU 90 operates the steering system 50, the drive system 100, and the braking system 102 in order to control controlled variables of the articulated vehicle 10 that is a controlled object. The controlled variables include vehicle speed and direction of travel. The drive system 100 may include a drive control device that controls controlled variables of the internal combustion engine and the rotating electrical machine that are controlled objects. In this case, "the ADAS ECU 90 operates the drive system 100" means that the ADAS ECU 90 outputs command signals to the drive control device. The braking system 102 may include a brake control device that controls a controlled variable of the device, which is a controlled object, that reduces the speed of rotation of the wheels. In this case, "the ADAS ECU 90 operates the braking system 102" means that the ADAS ECU 90 outputs command signals to the brake control device. Also, "the ADAS ECU 90 operates the steering system 50" means that the ADAS ECU 90 outputs command signals to the steering ECU 80.

The ADAS ECU 90 refers to a vehicle speed V detected by a vehicle speed sensor 112. The ADAS ECU 90 also refers to a tractor yaw rate rt detected by a tractor-side yaw rate sensor 114 in order to control the controlled variables. The ADAS ECU 90 is capable of communicating with a user interface 116. The user interface 116 is an interface through which information from the driver is input. The input of information from the driver includes input of the driver's intention. The input of the driver's intention includes input of whether the driver desires automatic steering or manual steering. The input of information from the driver also includes input of information regarding the trailer 30. The user interface 116 is also an interface that outputs information to the driver.

The ADAS ECU 90 includes a PU 92 and a storage device 94. The PU 92 is a software processing device including at least one of a CPU, a GPU, a TPU, and the like. An assist program 94a is stored in the storage device 94. The assist program 94a defines commands to execute an automatic steering process and the like.

"Process for Grasping Trailer State"

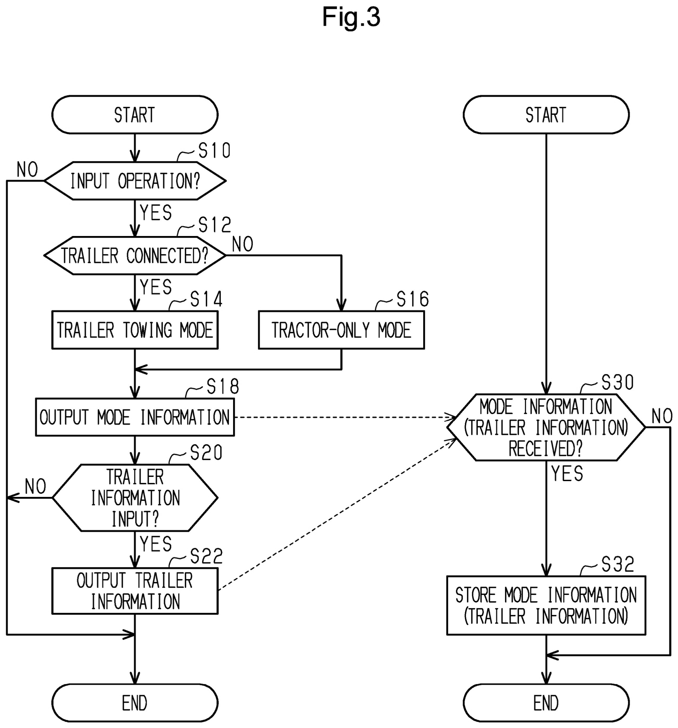

FIG. 3 shows a sequence of processing steps for grasping the state of the trailer. The process shown in FIG. 3 is executed while the ADAS ECU 90 and the steering ECU 80 communicate with each other. Specifically, the processing on the left side of FIG. 3 is implemented by the PU 92 of the ADAS ECU 90 repeatedly executing the assist program 94a at, for example, a predetermined cycle. The processing on the right side of FIG. 3 is implemented by the PU 82 of the steering ECU 80 repeatedly executing the steering control program 84a at, for example, a predetermined cycle. In the following description, step numbers in the process are denoted by numerals preceded by "S."

In the series of steps shown in FIG. 3, the PU 92 first determines whether an input operation has been performed via the user interface 116 regarding information as to whether the trailer 30 is connected to the tractor (S10). When the PU 92 determines that such an input operation has been performed (S10: YES), it determines whether information indicating that the trailer 30 is connected has been input (S12). When the PU 92 determines that information indicating that the trailer 30 is connected has been input (S12: YES), it sets the travel mode to a trailer towing mode (S14). On the other hand, when the PU 92 determines that information indicating that the trailer 30 is not connected has been input (S12: NO), it sets the travel mode to a tractor-only mode (S16). When the processing of S14 or S16 is completed, the PU 92 outputs data indicating the travel mode to the steering ECU 80 (S18).

The PU 92 then determines whether trailer information has been input via the user interface 116 (S20). The trailer information includes information regarding at least one of the following three: the weight of the trailer 30, the position of the center of gravity of the trailer 30, and the length of the trailer 30. When the PU 92 determines that trailer information has been input (S20: YES), it outputs the trailer information to the steering ECU 80 (S22).

When the processing of S22 is completed, or when NO in the processing of S10 or S20, the PU 92 ends the series of steps shown on the left side of FIG. 3. On the other hand, the PU 82 of the steering ECU 80 determines whether it has received data on the travel mode output in the processing of S18 or data on the trailer information output in the processing of S22 (S30). When the PU 82 determines that it has received such data (S30: YES), it stores the received data in the storage device 84 (S32).

When the processing of S32 is completed, or when NO in the processing of S30, the PU 82 ends the series of steps shown on the right side of FIG. 3. The processing of S10 and S12 corresponds to the towing information acquisition process. The processing of S20 and S22 corresponds to the trailer information acquisition process.

"Countermeasures Against Sway Phenomenon"

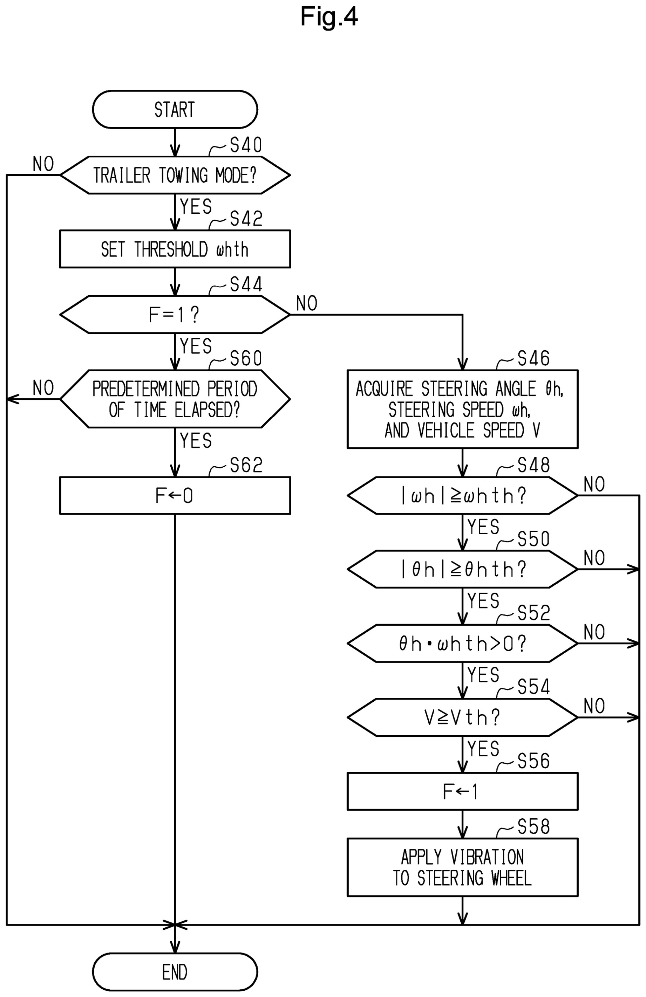

FIG. 4 shows a sequence of processing steps for suppressing occurrence of the sway phenomenon. The series of steps shown in FIG. 4 is implemented by the PU 82 repeatedly executing the steering control program 84a at, for example, a predetermined cycle.

In the series of steps shown in FIG. 4, the PU 82 first determines whether the vehicle is in the trailer towing mode (S40). When the PU 82 determines that the vehicle is in the trailer towing mode (S40: YES), it sets a threshold $\omega$hth based on the trailer information output in the processing of S22 (S42).

The PU 82 determines whether a flag F is "1" (S44). The flag F is set to "1" when a process is being executed to notify that the vehicle is in a situation in which the sway phenomenon is likely to occur. The flag F is set to "0" when such a process is not being executed. When the PU 82 determines that flag F is "0," it acquires a steering angle $\theta$h, a steering speed wh, and a vehicle speed V (S46). The steering speed wh is calculated by the PU 82 using time-series data of the steering angle $\theta$h.

The PU 82 determines whether the following condition A is satisfied (S48). Condition A: The absolute value of the steering speed wh is greater than or equal to the threshold $\omega$hth. The threshold $\omega$hth is set in accordance with the lower limit of the absolute value of the steering speed wh at which the sway phenomenon tends to occur.

When the PU 82 determines that the condition A is satisfied (S48: YES), it determines whether the following condition B is satisfied (S50).

Condition B: The absolute value of the steering angle $\theta$h is greater than or equal to a threshold $\theta$hth. The threshold $\theta$hth is set in accordance with the lower limit of the absolute value of the angle at which the sway phenomenon tends to occur.

When the PU 82 determines that the condition B is satisfied (S50: YES), it determines whether the following condition C is satisfied (S52).

Condition C: The steering angle $\theta$h and the steering speed wh have the same sign. This condition is established in view of the fact that, when the sway phenomenon occurs, the steering angle $\theta$h and the steering speed wh tend to have the same sign.

When the PU 82 determines that the condition C is satisfied, it determines whether the following condition D is satisfied (S54).

Condition D: The vehicle speed V is greater than or equal to a threshold Vth. The threshold Vth is set in accordance with the lower limit of the absolute value of the vehicle speed V at which the sway phenomenon tends to occur.

When the PU 82 determines that the condition D is satisfied (S54: YES), it sets the flag F to "1" (S56). The PU 82 then notifies the driver that the vehicle is in the situation in which the sway phenomenon is likely to occur by applying vibration to the steering wheel 52 for a predetermined period of time (S58). The condition for executing the processing of S58 is that the logical product of the conditions A to D is true. In the present embodiment, the situation in which the sway phenomenon is likely to occur is defined as a case where the logical product of the conditions A to D is true.

On the other hand, when the PU 82 determines that the flag F is "1" (S44: YES), it determines whether the predetermined period of time has elapsed since the start of the processing of S58 (S60). When the PU 68 determines that the predetermined period of time has elapsed (S60: YES), it sets the flag F to "0" (S62).

When the processing of S58 or S62 is completed, or when NO in the processing of any one of S40, S48 to S54, and S60, the PU 82 ends the series of steps shown in FIG. 4. The steering speed wh corresponds to the steered angular velocity variable. The processing of S46 corresponds to the acquisition process. The processing of S58 corresponds to the notification process.

"Functions and Effects of Embodiment"

In the trailer towing mode, when the logical product of the conditions A to D is true, the PU 82 causes the steering wheel 52 to vibrate. In this way, it is possible to notify the driver that the vehicle is in the situation in which the sway phenomenon is likely to occur. Therefore, the driver can consciously perform driving operations to avoid occurrence of the sway phenomenon.

<Second Embodiment>

Hereinafter, a second embodiment will be described with reference to the drawings, focusing on differences from the first embodiment.

"Countermeasures Against Sway Phenomenon"

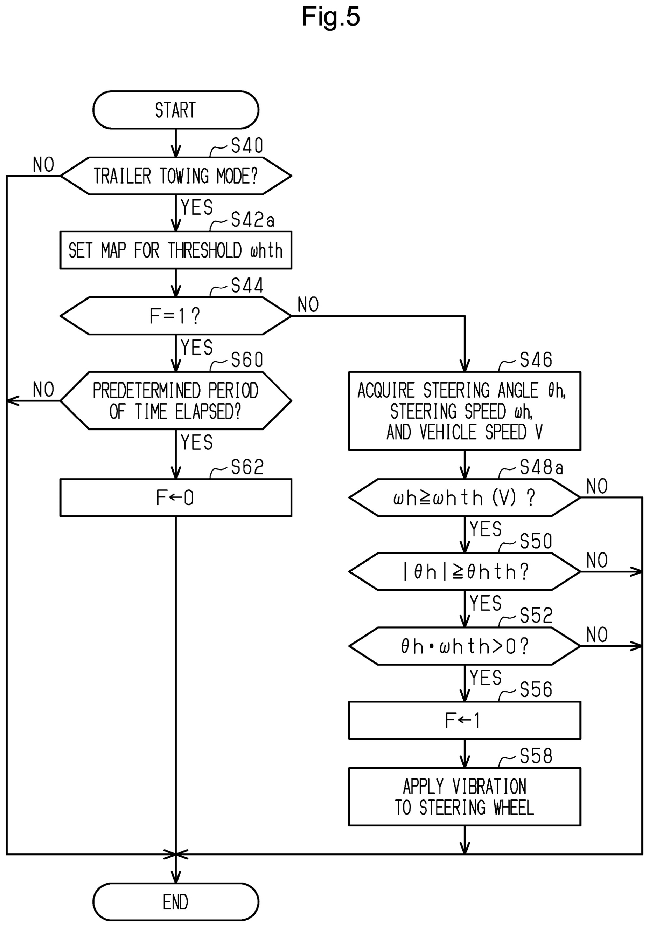

FIG. 5 shows a sequence of processing steps for suppressing occurrence of the sway phenomenon. The series of steps shown in FIG. 5 is implemented by the PU 82 repeatedly executing the steering control program 84a at, for example, a predetermined cycle. In FIG. 5, the steps corresponding to those in FIG. 4 are denoted by the same step numbers for convenience.

In the series of steps shown in FIG. 5, when the PU 82 determines that the vehicle is in the trailer towing mode (S40: YES), it selects map data for setting the threshold $\omega$hth in accordance with the trailer information (S42a). The map data is data in which the vehicle speed V is an input variable and the threshold $\omega$hth is an output variable. Appropriate pieces of map data respectively corresponding to different pieces of trailer information are stored in advance in the storage device 84.

When the processing of S46 is completed, the PU 82 determines whether the above condition A is satisfied (S48a). The threshold $\omega$hth is set by the PU 82 in accordance with the vehicle speed V at that time. The PU 82 changes the threshold $\omega$hth in accordance

with the vehicle speed V under the condition that the threshold $\omega$hth when the vehicle speed V is large is less than or equal to the threshold $\omega$hth when the vehicle speed V is small. Specifically, the PU 82 calculates the threshold $\omega$hth using a map based on the map data selected in the processing of S42a.

The map data is a data set of discrete values of the input variable and values of the output variable corresponding to the values of the input variable. The map calculation may be any process as long as, when the value of the input variable matches one of the input variable values in the map data, the calculation result is the corresponding output variable value of the map data. Alternatively, the map calculation may be any process as long as, when the value of the input variable does not match any of the input variable values in the map data, the calculation result is a value obtained by interpolation of multiple output variable values included in the map data. Alternatively, the map calculation may be a process in which, when the value of the input variable does not match any of the input variable values in the map data, the calculation result is the output variable value of the map data corresponding to the input variable value that is closest to this value of the input variable among the input variable values included in the map data.

In the description "changing B in accordance with A under the condition that B when A is large is less than or equal to B when A is small," the expressions "when A is large" and "when A is small" mean a relative magnitude relationship when comparing the two. For example, in a case where "when A is large" corresponds to "when A is a first value," "when A is small" corresponds to "when A is a second value smaller than the first value." This means that, according to the above process, depending on the settings of the first value and the second value, B when A is the first value may be smaller than B when A is the second value.

When the PU 82 determines that the condition A is satisfied, the process proceeds to S50. When the PU 82 determines that the logical product of the conditions A to C is true (S52: YES), the process proceeds to S56. The processing of S48a corresponds to the changing process.

"Functions and Effects of Embodiment"

In the trailer towing mode, when the logical product of the conditions A to C is true, the PU 82 causes the steering wheel 52 to vibrate. The PU 82 sets the threshold $\omega$hth that defines the condition A, in accordance with the vehicle speed V. Therefore, as compared with a case where the threshold $\omega$hth is a fixed value, whether the vehicle is in the situation in which the sway phenomenon is likely to occur can be more accurately identified based on whether the condition A is satisfied.

<Third Embodiment>

Hereinafter, a third embodiment will be described with reference to the drawings, focusing on differences from the first embodiment.

"Countermeasures Against Sway Phenomenon"

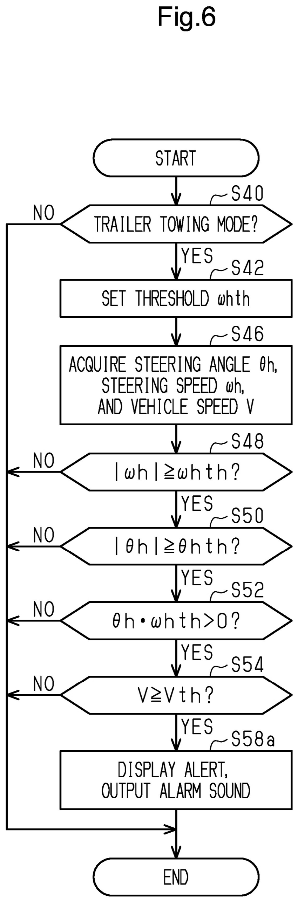

FIG. 6 shows a sequence of processing steps for suppressing occurrence of the sway phenomenon. The series of steps shown in FIG. 6 is implemented by the PU 82 repeatedly executing the steering control program 84a at, for example, a predetermined cycle. In FIG. 6, the steps corresponding to those in FIG. 4 are denoted by the same step numbers for convenience.

As shown in FIG. 6, in the present embodiment, the PU 82 determines whether the conditions A to D are satisfied by executing the processing of S40, S42, and S46 to S54. When the PU 82 determines that the logical product of the conditions A to D is true (S54: YES), it notifies that the vehicle in the situation in which the sway phenomenon is likely to occur by operating the user interface 116 (S58a). That is, the PU 82 causes a display device of the user interface 116 to display visual information warning that the vehicle is in the situation in which the sway phenomenon is likely to occur. The PU 82 also causes a speaker of the user interface 116 to output an alarm sound indicating that the vehicle is in the situation in which the sway phenomenon is likely to occur. The processing of S58a may be a process in which the PU 82 requests the ADAS ECU 90 to operate the user interface 116.

When the processing of S58a is completed, or when NO in the processing of any one of S40 and S48 to S54, the PU 82 ends the series of steps shown in FIG. 6. The processing of S58a corresponds to the notification process.

<Fourth Embodiment>

A fourth embodiment will be described below with reference to the drawings, focusing on differences from the first embodiment.

"Countermeasures Against Sway Phenomenon"

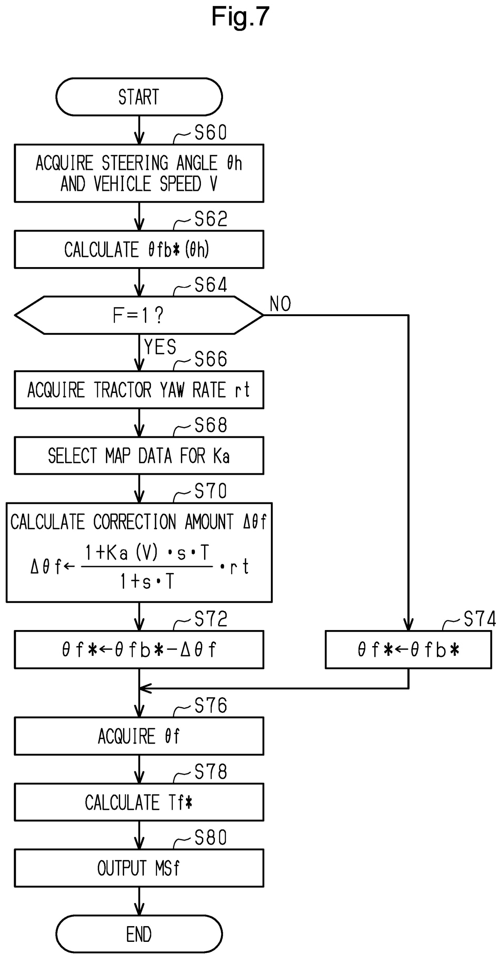

FIG. 7 shows a sequence of processing steps for suppressing occurrence of the sway phenomenon. The series of steps shown in FIG. 7 is implemented by the PU 82 repeatedly executing the steering control program 84a at, for example, a predetermined cycle.

In the series of steps shown in FIG. 7, the PU 82 first acquires the steering angle θh detected by the steering angle sensor 86 and the vehicle speed V detected by the vehicle speed sensor 112 (S60). Based on the steering angle θh, the PU 82 calculates a target front-wheel steered angle base value θfb* (S62). The target front-wheel steered angle base value θfb* is a base value of a target steered angle of the front wheels 22. The PU 82 sets the target front-wheel steered angle base value θfb* to a value having a positive correlation with the steering angle θh.

Next, the PU 82 determines whether the flag F used in the process of FIG. 4 is "1" (S64). When the PU 82 determines that the flag F is "1" (S64: YES), it acquires the tractor yaw rate rt (S66). Based on the trailer information, the PU 82 then selects map data for determining a coefficient Ka (S68). The map data is data in which the vehicle speed V is an input variable and the coefficient Ka is an output variable. A plurality of pieces of map data corresponding to the trailer information is stored in advance in the storage device 84.

The PU 52 obtains, as an output, a correction amount Δθf by inputting the tractor yaw rate rt into the following phase lead compensation filter defined by the coefficient Ka (S70).

$$(1 + Ka \cdot s \cdot T)/(1 + s \cdot T)$$

A Laplace operator s and a time constant T are used in the above expression. The coefficient Ka in the above expression is calculated by the PU 82 using a map in accordance with the vehicle speed V.

The PU 82 then substitutes, for a target front-wheel steered angle θf*, a value obtained by subtracting the correction amount Δθf from the target front-wheel steered angle base value θfb* (S72). On the other hand, when the PU 82 determines that the flag F is "0" (S64: NO), it substitutes the target front-wheel steered angle base value θfb* for the target front-wheel steered angle θf* (S74).

When the processing of S72 or S74 is completed, the PU 82 acquires a front-wheel steered angle θf (S76). The front-wheel steered angle θf is calculated by the PU 82 based on the rotation angle θmf. The PU 82 calculates a manipulated variable of feedback control in which the front-wheel steered angle θf is a controlled variable and the target front-wheel steered angle θf* is a target value of the controlled variable, and substitutes this manipulated variable for target front-wheel torque Tf* (S78). The PU 82 then outputs to the inverter 62 an operation signal MSf corresponding to the target front-wheel torque Tf*, thereby operating the inverter 62 (S80). When the target front-wheel torque Tf* is a value converted into the torque of the front-wheel steering motor 60, the operation signal MSf is a signal for bringing the torque of the front-wheel steering motor 60 closer to the target front-wheel torque Tf*.

When the processing of S80 is completed, the PU 82 ends the series of processes shown in FIG. 7. The processing of S66 to S72 and S76 to S80 corresponds to the attenuation process.

"Functions and Effects of Embodiment"

The PU 82 sets the target front-wheel steered angle base value $\theta fb^*$ in accordance with the steering angle $\theta h$. The PU 82 substitutes the target front-wheel steered angle base value $\theta fb^*$ for the target front-wheel steered angle $\theta f^*$. When the PU 82 executes the processing of S58, it substitutes, for the target front-wheel steered angle base value $\theta fb^*$, a value obtained by subtracting the correction amount $\Delta \theta f$ from the target front-wheel steered angle base value $\theta fb^*$. Since the correction amount $\Delta \theta f$ is an output value of the phase lead compensation filter with the tractor yaw rate rt as the input, it has a positive correlation with the tractor yaw rate rt. Accordingly, the target front-wheel steered angle $\theta f^*$ in the trailer towing mode is set to a value that reduces the absolute value of the tractor yaw rate rt compared to the target front-wheel steered angle base value $\theta fb^*$.

Since an increase in the absolute value of the yaw rate is a factor that causes the sway phenomenon, the use of the correction amount $\Delta \theta f$ can reduce the factor that causes the sway phenomenon.

<Fifth Embodiment>

A fifth embodiment will be described below with reference to the drawings, focusing on differences from the fourth embodiment.

"Countermeasures Against Sway Phenomenon"

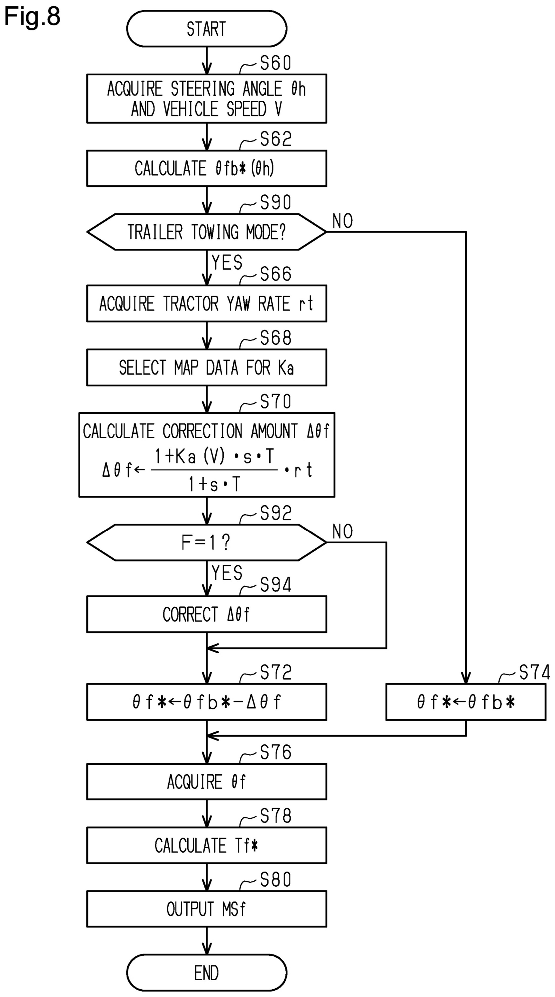

FIG. 8 shows a sequence of processing steps for suppressing occurrence of the sway phenomenon. The series of steps shown in FIG. 8 is implemented by the PU 82 repeatedly executing the steering control program 84a at, for example, a predetermined cycle. In FIG. 8, the steps corresponding to those in FIG. 7 are denoted by the same step numbers for convenience.

In the series of processing shown in FIG. 8, when the processing of S62 is completed, the PU 82 determines whether the vehicle is in the trailer towing mode (S90). When the PU 82 determines that the vehicle is in the trailer towing mode (S90: YES), it executes the processing of S66 to S70. The PU 82 then determines whether a flag F is "1" (S92). When the PU 82 determines that the flag F is "1" (S92: YES), it corrects the correction amount $\Delta \theta f$ such that its absolute value becomes larger than before correction (S94).

When the processing of S94 is completed, or when NO in the processing of S92, the PU 82 performs the processing of S72. On the other hand, when the PU 82 determines that the vehicle is in the tractor-only mode (S90: NO), the process proceeds to S74.

When the processing of S72 or S74 is completed, the PU 82 executes the processing of S76 to S80. When the processing of S80 is completed, the PU 82 ends the series of processes shown in FIG. 8. The processing of S94 corresponds to the attenuation process. The processing of S66 to S70 and S72 to S80 executed when NO in the processing of S92 corresponds to the towing process. The processing executed when YES in S92 corresponds to the attenuation process.

"Functions and Effects of Embodiment"

The PU 82 sets the target front-wheel steered angle base value $\theta fb^*$ in accordance with the steering angle $\theta h$. When the vehicle is in the tractor-only mode, the PU 82 substitutes the target front-wheel steered angle base value $\theta fb^*$ for the target front-wheel steered angle $\theta f^*$. On the other hand, when the vehicle is in the trailer towing mode, the PU 82 substitutes, for the target front-wheel steered angle base value $\theta fb^*$, a value obtained by subtracting the correction amount $\Delta \theta f$ from the target front-wheel steered angle base value $\theta fb^*$. Since the correction amount $\Delta \theta f$ is an output value of the phase lead compensation filter with the tractor yaw rate rt as the input, it has a positive correlation with the tractor yaw rate rt. Accordingly, the target front-wheel steered angle $\theta f^*$ in the trailer towing mode is set to a value that reduces the absolute value of the tractor yaw rate rt compared to the target front-wheel steered angle base value $\theta fb^*$.

Generally, when the tractor 20 is towing the trailer 30, the absolute value of the yaw rate tends to increase even during the same turning operation, compared to when the tractor 20 is not towing the trailer 30. That is, even when the steering wheel 52 is operated in the same manner in the trailer towing mode and in the tractor-only mode, the yaw response tends to be greater in the trailer towing mode. An increase in the absolute value of the yaw rate is a factor that causes the sway phenomenon.

In contrast, the use of the correction amount $\Delta \theta f$ reduces the likelihood that the yaw response becomes greater in the trailer towing mode when the steering wheel 52 is operated in the same manner in the above two modes.

Furthermore, when the PU 82 executes the processing of S58, the PU 82 sets the correction amount $\Delta \theta f$ to a value having the same sign as the correction amount $\Delta \theta f$ when the processing of S58 is not executed, and having an absolute value greater than the correction amount $\Delta \theta f$ when the processing of S58 is not executed. In this way, it is possible to further reduce the yaw response in the situation in which the sway phenomenon is likely to occur. As a result, the occurrence of the sway phenomenon can be more reliably suppressed.

<Other Embodiments>

The above embodiments can be modified as follows. The above embodiments and the following modifications can be combined as long as no technical contradictions arise.

"Regarding Steered Angular Velocity Variable"

- The steered angular velocity variable need not necessarily be the steering speed wh. For example, the steered angular velocity variable may be the rate of change in the steered angle of the front wheels 22. In short, the steered angular velocity variable may be any quantity having a positive correlation with the rate of change in the steered angle of the front wheels 22.

"Regarding Towing Information Acquisition Process"

- The towing information acquisition process is not limited to the process of acquiring information input via the user interface 116. For example, a camera may be provided at the rear of the tractor 20, and a process of determining the presence or absence of the trailer based on an image captured by the camera may be executed.
- The towing information acquisition process need not necessarily be executed.

"Regarding Notification Process"

- In the processing of S58a, one of the two types of information, namely audio information and visual information, may be output.
- The process of notifying the driver that the vehicle is in the situation in which the sway phenomenon is likely to occur using the steering wheel 52 is not limited to the process of applying vibration to the steering wheel 52. For example, this process may be a process of controlling the torque of the reaction force motor 54 such that greater force is needed to perform an operation to rotate the steering wheel 52.
- The process of outputting at least one of the two types of information, namely audio information and visual information, and the process of notifying that the vehicle is in the situation in which the sway phenomenon is likely to occur using the steering wheel 52 need not necessarily be executed exclusively. The notification process may include both of these processes.

"Regarding Towing Process"

- In the processes of FIGS. 7 and 8, the PU 82 set the coefficient Ka in accordance with the vehicle speed V. However, the present disclosure is not limited to this. For example, the PU 82 may set a time constant T in accordance with the vehicle speed V. For example, the coefficient Ka may be a value set in accordance with the trailer information and independently of the vehicle speed V.

- The process in which the tractor yaw rate rt is an input and a corrected value of the target front-wheel steered angle base value θfb* is an output is not limited to the process using the phase lead compensation process. For example, such a process may be a process of correcting the target front-wheel steered angle base value θfb* by a value obtained by multiplying the time derivative of the tractor yaw rate rt by a proportional gain. In such a case, the PU 82 may set the proportional gain based on at least one of the following two: the information on the trailer 30 and the vehicle speed V.
- The process in which a yaw rate is an input and a corrected value of the target front-wheel steered angle base value θfb* is an output is not limited to the process in which the tractor yaw rate rt alone is an input. For example, such a process may be a process in which the yaw rate of the trailer 30 is an input. Alternatively, for example, such a process may be a process in which both the tractor yaw rate rt and the yaw rate of the trailer 30 are inputs.
- As the towing process, the PU 82 may execute a process of setting a target value of the steered angle of the rear wheels 24 in accordance with the target front-wheel steered angle θf*. This process can be employed when the tractor 20 is provided with an actuator that steers the rear wheels 24. This process may be implemented by the PU 82 substituting, for the above target value of the rear wheels 24, a value obtained by multiplying the target front-wheel steered angle θf* by a gain. This gain is a manipulated variable of open-loop control for bringing a slip angle closer to zero. The PU 82 may change the gain G in accordance with at least one of the following two: the trailer information and the vehicle speed V.

The towing process including the process of setting the above target value of the rear wheels 24 in accordance with the target front-wheel steered angle θf* is not limited to the process described above. For example, the towing process may include a process of setting, in addition to the above target value of the rear wheels 24, a target steered angle of the trailer 30 in accordance with the target front-wheel steered angle θf*. This process can be employed when the trailer 30 is provided with an actuator that steers the wheels 32.

- As the towing process, the PU 82 may execute a process of controlling the torque of the reaction force motor 54 such that greater force is needed for the driver to operate the steering wheel 52.
- The object operated by the towing process is not limited to the steering system, and may be, for example, at least one of the following two: the drive system 100 and the braking system 102. For example, the PU 92 may operate either or both of the drive system 100 and the braking system 102 such that the magnitude of the drive force of the outer wheel of the tractor 20 relative to the drive force of the inner wheel of the tractor 20 becomes smaller than in a state where the tractor 20 is not towing the trailer 30.
- The trailer information need not necessarily be input in the towing process.

"Regarding Attenuation Process"

- The attenuation process need not necessarily be the process in which the yaw rate is an input and a corrected value of the target front-wheel steered angle base value θfb* is an output. The attenuation process may be any process that attenuates the yaw response, as described above in "Regarding Towing Process."

"Regarding Input Unit"

- The input unit into which the driver inputs a steering intention is not limited to the steering wheel 52. The input unit may be, for example, a joystick.

"Regarding Control Device"

- Part of the processes executed by the steering ECU 80 in the above embodiments may be executed by the ADAS ECU 90.
- The ADAS ECU 90 and the steering ECU 80 may be integrated into one unit.
- The control device is not limited to one that executes software processing. For example, the control device may include a dedicated hardware circuit such as an ASIC that executes at least part of the processes executed in the above embodiments. That is, the control device may include a processing circuit having any of the following configurations (a) to (c): (a) a processing circuit including a processing unit that executes all of the above processes in accordance with a program and a program storage device such as a storage device that stores the program, (b) a processing circuit including a processing unit and a program storage device that execute part of the above processes in accordance with a program, and a dedicated hardware circuit that executes the remaining processes, and (c) a processing circuit including a dedicated hardware circuit that executes all of the above processes. The number of software execution devices including a processing unit and a program storage device may be two or more. The number of dedicated hardware circuits may be two or more.

"Regarding Control Entity"

- For example, part of the above processes may be executed by a mobile terminal of the driver. That is, for example, the processing executed by the ADAS ECU 90 in FIG. 3 and the processing of S58a may be executed by the mobile terminal.

"Others"

- The steering system of the tractor 20 need not necessarily include a steer-by-wire system. In other words, this steering system may be a system in which the steering wheel 52 and the front wheels 22 are connected.

**Claims**

1. A control device for an articulated vehicle, wherein:

   the control device is applied to an articulated vehicle including a tractor and a trailer configured to be towed by the tractor;
   the control device is configured to execute an acquisition process and a notification process;
   the acquisition process is a process of acquiring a value of a steered angular velocity variable;
   the steered angular velocity variable is a variable indicating a rate of change in a steered angle of the tractor;
   the notification process is a process of, when an absolute value of the value of the steered angular velocity variable is greater than or equal to a threshold, notifying of a possibility of occurrence of a sway phenomenon of the trailer by operating a notification device; and
   the notification device is an interface configured to convey information to a person.

2. The control device for the articulated vehicle according to claim 1, wherein a condition for executing the notification process includes a condition that a vehicle speed is greater than or equal to a predetermined speed.

3. The control device for the articulated vehicle according to claim 1, wherein a condition for executing the notification process includes a condition that an absolute value of the steered angle is greater than or equal to a predetermined angle.

4. The control device for the articulated vehicle according to claim 1, wherein a condition for executing the notification process includes a condition that a sign of the steered angular velocity variable matches a sign of the steered angle.

5. The control device for the articulated vehicle according to claim 1, wherein:

   the control device is configured to execute a towing information acquisition process of acquiring information as to whether the tractor is towing the trailer; and
   a condition for executing the notification process includes a condition that the tractor is towing the trailer.

6. The control device for the articulated vehicle according to claim 1, wherein:

   the control device is configured to execute a trailer information acquisition process of acquiring trailer information;
   the trailer information is information indicating at least one of the following three: a position of a center of gravity of the trailer, a total weight of the trailer, and a length of the trailer; and
   the control device is configured to execute a change process of changing the threshold in accordance with the trailer information.

7. The control device for the articulated vehicle according to claim 1, wherein the control device is configured to execute a change process of changing the threshold in accordance with a vehicle speed.

8. The control device for the articulated vehicle according to claim 1, wherein:

   the control device is configured to execute an attenuation process when executing the notification process;
   the attenuation process is a process of operating an operation target in accordance with a value of an operation input variable determined so as to attenuate a yaw response to a turning instruction operation;
   the operation target is at least one of the following three systems: a steering system, a drive system, and a braking system; and
   the operation input variable is a variable that determines an input signal to the operation target.

9. The control device for the articulated vehicle according to claim 8, wherein:

   the control device is configured to execute a towing information acquisition process and a towing process;
   the towing information acquisition process is a process of acquiring information as to whether the tractor is towing the trailer;
   the towing process is a process of operating the operation target in accordance with the value of the operation input variable determined so as to attenuate the yaw response to the turning instruction operation when the tractor is towing the trailer compared to when the tractor is not towing the trailer; and
   the attenuation process is a process of operating the operation target in accordance with the value of the operation input variable determined such that a degree of attenuation of the yaw response to an input is greater compared to the towing process.

10. The control device for the articulated vehicle according to claim 1, wherein the notification process includes a process of notifying of a possibility of occurrence of the sway phenomenon of the trailer by applying vibration to an input unit configured to be operated by a driver to make a steering input.

11. The control device for the articulated vehicle according to claim 1, wherein the notification process includes a process of notifying of a possibility of occurrence of the sway phenomenon of the trailer by outputting visual information or audio information.

12. A control method for an articulated vehicle, the control method being a steering control method that is applied to an articulated vehicle including a tractor and a trailer configured to be towed by the tractor, the control method comprising:

   executing an acquisition process; and
   executing a notification process, wherein:

      the acquisition process is a process of acquiring a value of a steered angular velocity variable;
      the steered angular velocity variable is a variable indicating a rate of change in a steered angle of the tractor;
      the notification process is a process of, when an absolute value of the value of the steered angular velocity variable is greater than or equal to a threshold, notifying of a possibility of occurrence of a sway phenomenon of the trailer by operating a notification device; and
      the notification device is an interface configured to convey information to a person.

13. A control program for an articulated vehicle, the control program being a steering control program that is applied to an articulated vehicle including a tractor and a trailer configured to be towed by the tractor, the control program comprising a command to cause a computer to execute an acquisition process and a notification process, wherein:

the acquisition process is a process of acquiring a value of a steered angular velocity variable;
the steered angular velocity variable is a variable indicating a rate of change in a steered angle of the tractor;
the notification process is a process of, when an absolute value of the value of the steered angular velocity variable is greater than or equal to a threshold, notifying of a possibility of occurrence of a sway phenomenon of the trailer by operating a notification device; and
the notification device is an interface configured to convey information to a person.

# Fig.1

Fig.2

# Fig.3

```
        START                                      START
          │                                          │
          ▼        S10                               │
NO  ┌─────────────────┐                              │
◄───┤ INPUT OPERATION? │                             │
    └─────────────────┘                              │
          │ YES                                      │
          ▼        S12          NO                   │
    ┌──────────────────┐────────┐                    │
    │ TRAILER CONNECTED?│        │                   │
    └──────────────────┘        │                    │
          │ YES    S14          ▼  S16               │
    ┌──────────────────┐  ┌──────────────────┐       │
    │ TRAILER TOWING MODE│  │ TRACTOR-ONLY MODE│      │
    └──────────────────┘  └──────────────────┘       │
          │                       │                  │
          ▼◄──────────────────────┘                  ▼        S30
          │        S18                        ┌──────────────────────┐  NO
    ┌──────────────────────┐- - - - - - - - ->│ MODE INFORMATION     │─────
    │ OUTPUT MODE INFORMATION│                 │ (TRAILER INFORMATION)│
    └──────────────────────┘                  │ RECEIVED?            │
          │        S20                         └──────────────────────┘
          ▼                                          │ YES
    ┌──────────────┐  NO                             │
    │   TRAILER    │◄────                            ▼        S32
    │ INFORMATION  │                         ┌──────────────────────┐
    │   INPUT?     │                         │ STORE MODE INFORMATION│
    └──────────────┘                         │ (TRAILER INFORMATION) │
          │ YES    S22                        └──────────────────────┘
          ▼                                          │
    ┌──────────────┐                                 ▼◄────────
    │ OUTPUT TRAILER│- - - - -                        │
    │ INFORMATION   │                                 │
    └──────────────┘                                  │
          │                                           │
          ▼                                           ▼
        END                                          END
```

# Fig.4

```
                    START
                      │
                      ▼        ─S40
   NO   ┌──────────────────────────┐
  ◄─────┤   TRAILER TOWING MODE?    │
        └──────────────────────────┘
                    │ YES
                    ▼        ─S42
        ┌──────────────────────────┐
        │    SET THRESHOLD ωhth     │
        └──────────────────────────┘
                    │
                    ▼        ─S44
        ┌──────────────────────────┐   NO
        │          F=1 ?           ├─────────────────────┐
        └──────────────────────────┘                     │
                    │ YES                                 │
                    ▼        ─S60                         ▼        ─S46
   NO   ┌──────────────────────────┐      ┌──────────────────────────────┐
  ◄─────┤   PREDETERMINED PERIOD   │      │  ACQUIRE STEERING ANGLE θh,   │
        │    OF TIME ELAPSED?      │      │    STEERING SPEED ωh,         │
        └──────────────────────────┘      │   AND VEHICLE SPEED V         │
                    │ YES                 └──────────────────────────────┘
                    ▼        ─S62                         │
        ┌──────────────────────────┐                     ▼        ─S48
        │          F←0             │      ┌──────────────────────────────┐   NO
        └──────────────────────────┘      │         |ωh|≧ωhth?           ├─────►
                    │                      └──────────────────────────────┘
                    │                                     │ YES
                    │                                     ▼        ─S50
                    │                      ┌──────────────────────────────┐   NO
                    │                      │         |θh|≧θhth?           ├─────►
                    │                      └──────────────────────────────┘
                    │                                     │ YES
                    │                                     ▼        ─S52
                    │                      ┌──────────────────────────────┐   NO
                    │                      │         θh・ωhth>0?          ├─────►
                    │                      └──────────────────────────────┘
                    │                                     │ YES
                    │                                     ▼        ─S54
                    │                      ┌──────────────────────────────┐   NO
                    │                      │          V≧Vth?             ├─────►
                    │                      └──────────────────────────────┘
                    │                                     │ YES
                    │                                     ▼        ─S56
                    │                      ┌──────────────────────────────┐
                    │                      │          F←1                 │
                    │                      └──────────────────────────────┘
                    │                                     │        ─S58
                    │                                     ▼
                    │                      ┌──────────────────────────────┐
                    │                      │    APPLY VIBRATION           │
                    │                      │    TO STEERING WHEEL         │
                    │                      └──────────────────────────────┘
                    │                                     │
                    └──────────────┬──────────────────────┘
                                   ▼
                                 END
```

# Fig.5

START

S40 — TRAILER TOWING MODE? — NO

YES

S42a — SET MAP FOR THRESHOLD ωhth

S44 — F=1 ? — NO

YES

S60 — PREDETERMINED PERIOD OF TIME ELAPSED? — NO

YES

S62 — F←0

S46 — ACQUIRE STEERING ANGLE θh, STEERING SPEED ωh, AND VEHICLE SPEED V

S48a — ωh≧ωhth (V) ? — NO

YES

S50 — |θh|≧θhth? — NO

YES

S52 — θh・ωhth>0? — NO

YES

S56 — F←1

S58 — APPLY VIBRATION TO STEERING WHEEL

END

# Fig.6

```
                    ┌─────────────┐
                    │    START    │
                    └──────┬──────┘
                           │      ╭─S40
              NO    ╱──────▼──────╲
    ┌───────────────  TRAILER TOWING MODE?
    │               ╲─────────────╱
    │                      │ YES
    │                      │      ╭─S42
    │               ┌──────▼──────────┐
    │               │ SET THRESHOLD ωhth │
    │               └──────┬──────────┘
    │                      │      ╭─S46
    │               ┌──────▼──────────────┐
    │               │ ACQUIRE STEERING ANGLE θh, │
    │               │ STEERING SPEED ωh,   │
    │               │ AND VEHICLE SPEED V  │
    │               └──────┬──────────────┘
    │                      │      ╭─S48
    │        NO     ╱──────▼──────╲
    │◄─────────────── |ωh|≧ωhth?
    │               ╲─────────────╱
    │                      │ YES
    │                      │      ╭─S50
    │        NO     ╱──────▼──────╲
    │◄─────────────── |θh|≧θhth?
    │               ╲─────────────╱
    │                      │ YES
    │                      │      ╭─S52
    │        NO     ╱──────▼──────╲
    │◄─────────────── θh・ωhth>0?
    │               ╲─────────────╱
    │                      │ YES
    │                      │      ╭─S54
    │        NO     ╱──────▼──────╲
    │◄─────────────── V≧Vth?
    │               ╲─────────────╱
    │                      │ YES
    │                      │      ╭─S58a
    │               ┌──────▼──────────┐
    │               │ DISPLAY ALERT,  │
    │               │ OUTPUT ALARM SOUND │
    │               └──────┬──────────┘
    │                      │
    └──────────────────────►
                           │
                    ┌──────▼──────┐
                    │     END     │
                    └─────────────┘
```

S40 TRAILER TOWING MODE?

S42 SET THRESHOLD $\omega hth$

S46 ACQUIRE STEERING ANGLE $\theta h$, STEERING SPEED $\omega h$, AND VEHICLE SPEED V

S48 $|\omega h| \geqq \omega hth$?

S50 $|\theta h| \geqq \theta hth$?

S52 $\theta h \cdot \omega hth > 0$?

S54 $V \geqq Vth$?

S58a DISPLAY ALERT, OUTPUT ALARM SOUND

# Fig.7

```
                    ┌─────────────┐
                    │    START    │
                    └──────┬──────┘
                           │        ┌─S60
                    ┌──────▼──────────────┐
                    │ ACQUIRE STEERING ANGLE θh │
                    │  AND VEHICLE SPEED V │
                    └──────┬──────────────┘
                           │        ┌─S62
                    ┌──────▼──────────────┐
                    │  CALCULATE θfb*(θh) │
                    └──────┬──────────────┘
                           │        ┌─S64
                    ╱──────▼──────────╲    NO
                   ╱      F=1 ?        ╲──────────┐
                    ╲─────────────────╱          │
                           │ YES                 │
                           │      ┌─S66           │
                    ┌──────▼──────────────┐       │
                    │ ACQUIRE TRACTOR YAW RATE rt │
                    └──────┬──────────────┘       │
                           │      ┌─S68           │
                    ┌──────▼──────────────┐       │
                    │ SELECT MAP DATA FOR Ka │    │
                    └──────┬──────────────┘       │
                           │      ┌─S70           │
                    ┌──────▼──────────────────┐   │
                    │ CALCULATE CORRECTION AMOUNT Δθf │
                    │                         │   │
                    │         1+Ka(V)·s·T     │   │
                    │  Δθf ← ───────────── ·rt │   │
                    │           1+s·T         │   │
                    └──────┬──────────────────┘   │
                           │      ┌─S72      ┌─S74 │
                    ┌──────▼──────┐      ┌───▼──────┐
                    │ θf*←θfb*−Δθf │      │ θf*←θfb*  │
                    └──────┬──────┘      └───┬──────┘
                           │◄─────────────────┘
                           │      ┌─S76
                    ┌──────▼──────┐
                    │  ACQUIRE θf │
                    └──────┬──────┘
                           │      ┌─S78
                    ┌──────▼──────┐
                    │ CALCULATE Tf* │
                    └──────┬──────┘
                           │      ┌─S80
                    ┌──────▼──────┐
                    │  OUTPUT MSf │
                    └──────┬──────┘
                    ┌──────▼──────┐
                    │     END     │
                    └─────────────┘
```

Fig.8

Fig.8 flowchart:

START

S60 — ACQUIRE STEERING ANGLE $\theta h$ AND VEHICLE SPEED V

S62 — CALCULATE $\theta fb*(\theta h)$

S90 — TRAILER TOWING MODE? — NO →

YES
S66 — ACQUIRE TRACTOR YAW RATE $rt$

S68 — SELECT MAP DATA FOR Ka

S70 — CALCULATE CORRECTION AMOUNT $\Delta\theta f$
$$\Delta\theta f \leftarrow \frac{1+Ka(V)\cdot s\cdot T}{1+s\cdot T}\cdot rt$$

S92 — F=1? — NO →

YES
S94 — CORRECT $\Delta\theta f$

S72 — $\theta f* \leftarrow \theta fb* - \Delta\theta f$

S74 — $\theta f* \leftarrow \theta fb*$

S76 — ACQUIRE $\theta f$

S78 — CALCULATE $Tf*$

S80 — OUTPUT MSf

END

## INTERNATIONAL SEARCH REPORT

| International application No. |
|---|
| **PCT/JP2024/023525** |

### A. CLASSIFICATION OF SUBJECT MATTER

*G08G 1/16*(2006.01)i; *B60W 30/02*(2012.01)i; *B60W 40/10*(2012.01)i; *B60W 40/12*(2012.01)i; *B60W 50/14*(2020.01)i; *B62D 53/00*(2006.01)i

FI: G08G1/16 C; B60W30/02; B60W40/10; B60W40/12; B60W50/14; B62D53/00 B

According to International Patent Classification (IPC) or to both national classification and IPC

### B. FIELDS SEARCHED

Minimum documentation searched (classification system followed by classification symbols)

G08G1/16; B60W30/02; B60W40/10; B60W40/12; B60W50/14; B62D53/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 10-236289 A (TOYOTA JIDOSHA KABUSHIKI KAISHA) 08 September 1998 (1998-09-08) paragraphs [0047]-[0054] | 1-3, 5-13 |
| A | paragraphs [0047]-[0054] | 4 |
| Y | JP 2006-527359 A (DAIMLERCHRYSLER AG) 30 November 2006 (2006-11-30) paragraphs [0017]-[0018], [0043], [0045]-[0046] | 1-3, 5-13 |
| Y | JP 2015-036267 A (ISUZU MOTORS LIMITED) 23 February 2015 (2015-02-23) paragraph [0047] | 2-3 |
| Y | JP 2012-166647 A (PANASONIC CORPORATION) 06 September 2012 (2012-09-06) paragraphs [0030], [0034], [0042]-[0043], fig. 3 | 5 |
| Y | JP 2020-124962 A (TOYOTA JIDOSHA KABUSHIKI KAISHA) 20 August 2020 (2020-08-20) paragraphs [0035], [0043], fig. 4 | 8-9 |

☑ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **19 July 2024** | **30 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2024/023525** |

**C.     DOCUMENTS CONSIDERED TO BE RELEVANT**

| Category* | Citation of document, with indication, where appropriate, of the relevant passages | Relevant to claim No. |
| --- | --- | --- |
| A | WO 2014/177380 A1 (JAGUAR LAND ROVER LIMITED) 06 November 2014 (2014-11-06) entire text, all drawings | 1-13 |

Form PCT/ISA/210 (second sheet) (July 2022)

## INTERNATIONAL SEARCH REPORT
### Information on patent family members

International application No.

**PCT/JP2024/023525**

| Patent document cited in search report | | | Publication date (day/month/year) | Patent family member(s) | | | Publication date (day/month/year) |
|---|---|---|---|---|---|---|---|
| JP | 10-236289 | A | 08 September 1998 | US | 6042196 | A | |
| | | | | column 7, line 17 - column 8, line 15 | | | |
| JP | 2006-527359 | A | 30 November 2006 | US | 2006/0244579 | A1 | |
| | | | | paragraphs [0015]-[0016], [0044], [0046]-[0047] | | | |
| | | | | WO | 2004/109326 | A1 | |
| JP | 2015-036267 | A | 23 February 2015 | (Family: none) | | | |
| JP | 2012-166647 | A | 06 September 2012 | (Family: none) | | | |
| JP | 2020-124962 | A | 20 August 2020 | (Family: none) | | | |
| WO | 2014/177380 | A1 | 06 November 2014 | GB | 2513616 | A | |
| | | | | entire text, all drawings | | | |

Form PCT/ISA/210 (patent family annex) (July 2022)

**EP 4 745 939 A1**

**Patent documents cited in the description**

- US 20190001944